# EUROPEAN PATENT SPECIFICATION

(11) **EP 1 346 101 B1**
(45) Date of publication and mention of the grant of the patent: **11.01.2006**
(21) Application number: 01989902.0
(22) Date of filing: 05.11.2001
(51) Int. Cl.: D06M 23/18, D06M 15/37, D06M 15/55, D06M 15/63, D06H 7/00, C08L 63/00

(54) **METHOD FOR PREPARING FABRIC FOR CUTTING**
VERFAHREN ZUM VORBEREITEN VON TEXTILEN FLÄCHENGEBILDEN ZUM ZUSCHNEIDEN
PROCEDE POUR PREPARER UN TISSU POUR LA DECOUPE

(30) Priority: 21.11.2000 GB 0028342
(43) Date of publication of application: 24.09.2003
(73) Proprietor: CYTEC TECHNOLOGY CORP., Wilmington, Delaware 19801 (US)
(72) Inventor: CARTER, Jeffrey Thomas, Middlesbrough, Cleveland TS98 9OR (GB); IO FARO, Carmelo, Saltburn-by-the-Sea, Cleveland TS12 1LT (IT)
(74) Representative: Bowman, Paul Alan
(86) International application number: PCT/US2001/046404
(87) International publication number: WO 2002/042548

(56) References cited:
- EP-A- 0 365 168
- EP-A- 0 618 579
- GB-A- 668 721
- US-A- 5 981 034

## Description

The present invention relates to a method for preparing fabric for cutting. More particularly the invention relates to a method for preparing and cutting fabric using a resin composition to tack the cut edges.

Composites are used as engineering grade polymers in the construction of load bearing articles, typically in marine, automotive, aerospace and construction industries, such as storage vessels, transportation containers, vehicle parts including cars, trucks, boats, aeroplanes, trains and the like. The composites comprise fibrous reinforcement such as glass fibres, carbon fibres etc, and a cured resin.

Composites are traditionally made from prepregs of fibre impregnated with a matrix resin of combined thermoplast resin and thermosetting resin which are laid up, moulded and laminated. Prepreg properties and quality are controlled for toughness, strength, flexibility and the like. Sheets of prepreg may be cut to size for laying up and moulding in the construction of a given article.

More recently composites are made by various dry moulding processes in which dry fibres are first arranged in a mould as a perform and then injected or infused directly in-situ with matrix resins. The preform comprises fibres placed in the mould as a fibre form of one or a plurality of plies or layers of fibrous material, cut and laid up with desired fibre orientation to form the required shape and held in place by stitching, weaving, braiding, stapling or bonding using binders.

Dry fibre moulding processes necessitate the cutting of dry fabric or fibres to size and/or shape. One technique employs an ultrasonic cutting tip operating at very high frequency for example 68,000 vibrations per second. This has been found to cut fabrics efficiently and cleanly. Unfortunately, the fabric loses its integrity at the cut edge and as a result individual fibres tend to loosen, whereby the border region of the fabric tends to lose alignment, density and form in general. This presents an insurmountable problem, whereby the fabrics cannot be used in the preparation of finished parts, since the borders or edges of the articles are substandard in terms of properties, and quality and unsuited for joining, together with other parts in a finished product.

Currently the solution to the problem requires oversized cutting and moulding of fabric and cutting the moulded part to shape and size. This introduces difficulties in accuracy of shaping and sizing articles and is laborious and time consuming.

Heat sealing of polymer fabrics and ropes is known in the art, and typically comprises heating and softening a resin fabric or rope which binds the edges together to seal or prevent unravelling. In such cases, the seal is formed of the molten polymer forming the fabric itself, as distinct from a dedicated sealant and is chemically changed on heating, forming a rigid, brittle seal on cooling.

Sealing with an adhesive may also be known in the art, however, adhesives are thermally or chemically reactive and are typically formulated to have a viscosity adapted for accurate dispensing, without permeating or wicking into a material onto which they are dispersed. Since fabrics unravel or loosen at the time of cutting, in-situ sealing is required. Such adhesives therefore, although suited for sealing a pre-cut fabric, would be unsuitable for an ineffective in-situ sealing of a fabric, simultaneous with cutting.

Accordingly there is a need for an alternative approach to preparation of dry fabrics for moulding. We have now surprisingly found that a novel preparation and cutting method using a resin composition as a cutting aid for dry fabrics in particular manner increases the accuracy of the fabric cutting and shaping, and moreover does not interfere with the subsequent matrix resin injection process in constructing composites of preforms or prepregs, and the properties of a finished product.

Accordingly in the broadest aspect of the invention there is provided a method for preparing fabric for cutting for dry moulding comprising dispensing a trace of a resin composition on the fabric surface to provide a desired fabric cutting line for cutting the fabric along the trace of dispensed resin with cutting means, the trace penetrating to a depth of from 40 to 99% of the fabric thickness, wherein the resin composition is stable under ambient or elevated temperature dispensing and cutting conditions, has a viscosity in the range 2000-1 Pa.s (18°C) and tack or softening at ambient or elevated temperature in the range 20 to 130°C, and comprises at least one resin component which is unchanged after dispensing and cutting at dispensing and cutting conditions, and reverts to its resin form.

Preferably the method comprises dispensing a resin composition comprising substantially no curing agent, catalyst or cross linking agent which would be activated by the dispensing or curing conditions.

It is a particular advantage of the invention that the resin composition is thermally stable under both the dispensing and cutting conditions, i.e. is substantially unchanged on heating to elevated temperature. More preferably the resin is thermally stable at least up to a temperature at which it is characterised by moderate tack, adapted to tack together fabric at its edges.

Preferably the method of the invention comprises laying up fabric for cutting on a suitable surface such as a cutting table, pre-tracing a shape to be cut with a suitable marker, dispensing resin composition as hereinbefore defined and cutting, or storing for later cutting.

Preferably dispensing conditions according to the method of the invention comprises preheating the resin to a melt prior to dispensing, or heating in situ, to generate the resin in melt form at a temperature dependent on the nature of the resin components. Preferably the resin is provided in melt form at ambient or elevated temperature in the range 20-130°C, more preferably 20-70°C. Alternatively the resin may be dispensed as a powder or film and heated to molten, or may be dispensed as a spray. The resin is characterised by tack in molten or spray form and adheres fabric prior to cutting.

After cooling the trace of resin is followed with a cutting means as hereinbefore defined. Cutting may be immediately following trace dispensing or at a later stage thereafter. Preferably trace dispensing and cutting are performed in immediate succession in a combined operation for accuracy of following resin trace with the cutting means.

Suitably cutting conditions according to the method comprises contact or incidence by cutting means of the molten or cooled resin trace, preferably of the trace cooled to ambient temperature. The thermally stable composition regains substantially all properties of the resin on cooling, whereby it may be readily cut by the cutting means. Contact or incidence of cutting means may generate insignificant energy and no temperature increase or may generate substantial energy causing localized temperature elevation of the resin trace. For example ultrasonic cutting operates at high cutting frequency and provides excellent quality of cut but causes localized elevated temperature. In a particular advantage, high frequency or high speed cutting substantially avoids rein adhering to the cutting blade. Cutting means may be any suitable means selected from a laser or cutting blade such as an advancing blade. Preferably cutting means comprise an ultrasonic tip operating at high cutting frequency for example 68,000 vibrations per second and using a diamond, graphite or steel tip. Ultrasonic tips are known for example commercially available (GFM Aktiengesellschaft, Gerber Garment Technology Inc. etc) or as disclosed in US5318420, US4596171, US4373412 and US3495492. Preferably a cutting surface comprises a soft bench for example of expanded poly vinyl which is adapted to be penetrated by a cutting means thereby giving a clean fabric cut. Preferably cutting is performed under vacuum to aid in maintaining the positioning of the fabric during cutting, more preferably with use of an airwave to assist in vacuum control.

The method of the invention is for cutting fabrics for dry moulding in the construction of a composite material. In a particular advantage the method of the invention is used for cutting any fabric which is prone to disassemble, disintegrate, or otherwise form rough or loose edges on dry cutting.

Reference herein to a fabric is typically to directional or non-directional aligned fibres in the form of a mesh, tow, scrim, braided or woven, knitted, non-crimped fabrics and the like. Fabrics may be available commercially in any of the above forms or may be prepared specifically for a given use. Commercial or otherwise prepared fabrics which may be cut using the method of the invention may be of any desired density and are typically of density or aerial weight in the range of 200-2000g/m², preferably 400-1600 g/m², more preferably 400-1200 g/m². Particular advantages are obtained with heavy fabrics in the range 1000-1600 g/m². Fabric density may vary as a function of fibre thickness or packing density of fibres.

Fabric may be of any desired thickness for the suited purpose and is suitably of thickness in the range 0.2 - 10 millimetres, either as a single fabric layer or a plurality of assembled layers.

The fibre comprised in the fabric may be any organic or inorganic fibres and mixtures thereof. Organic fibres are selected from tough or stiff polymers such as polyester, polyaromatic or poly paraphenylene terephthalamide. Among inorganic fibres carbon, boron or glass fibres such as "E" or "S" can be used, or alumina, zirconia, silicon carbide, other compound ceramics or metals. A very suitable reinforcing fibre is carbon, for example as graphite. Graphite fibres which have been found to be especially useful in the invention are those supplied by Amoco under the trade designations T650-35, T650-42 and T300; those supplied by Toray under the trade designation T800-HB; and those supplied by Hercules under the trade designations AS4, AU4, IM 8 and IM 7.

Organic or carbon fibre is preferably unsized or is sized with a material that is compatible with the composition according to the invention, in the sense of being soluble in the liquid precursor composition without adverse reaction or of bonding both to the fibre and to the thermoset/thermoplastic composition according to the invention. In particular carbon or graphite fibres that are unsized or are sized with epoxy resin precursor or thermoplast such as polyarylsulphone are preferred. Inorganic fibre preferably is sized with a material that bonds both to the fibre and to the polymer composition; examples are the organo-silane coupling agents applied to glass fibre.

The resin composition for use in cutting fabric according to the method of the invention may be any suitable resin composition which is characterised by suitable properties of viscosity and tack for permeation and controlled penetration and tack of cut ends of fabric and having properties of flexibility to allow fabric conformation without tearing or cracking and which allows passage of preform binder resin and matrix resin in subsequent resin moulding, and does not affect the finished product properties.

The resin composition is preferably characterised by temperature independent viscosity or partially dependent viscosity whereby viscosity is substantially unchanged or decreases in the above defined range both on heating to a resin melt, and on contact or incidence of the cutting means. It will be appreciated that the resin melt provides tack to adhere cut ends of fabric as hereinbefore defined. It is therefore important that the resin melt is not able to penetrate the fabric to contact an opposing surface on which the fabric is laid up for cutting, whereby it may contaminate the cutting surface. It is also important that the resin melt does not adhere to the cutting means. Contamination of the cutting surface or cutting means can result in undesired adhesion of the fabric which may loosen or remove fibres from the fabric on withdrawal of the fabric from the cutting surface or blade or from a stack of cut fabrics or the like. Contamination of the cutting surface can also damage the cutting means.

Preferably the composition comprises in combination a plurality of resin components selected by nature, and number average molecular weight (Mn) and ratio of thermoplast to thermoset to achieve a desired viscosity as hereinbefore defined for a particular fabric which it is desired to cut, whereby the resin permeates the fabric surface and optionally partially penetrates the fabric.

Preferably the resin composition viscosity and/or dispensing rate is selected to provide a steady slow flow front on dispensing, serving to "meter" resin, filling all cavities rather than by passing the fabric.

A trace of resin composition, dispensed according to the method as hereinbefore defined may be any suitable line, band, track or the like of sufficient width to follow with a cutting means in manner that the cutting means only contacts fabric within the trace. Broader trace width may be employed but is likely to be detrimental to the subsequent infusion or injection, and involves needless additional use of resin. Preferably the trace width is as small as possible, for example in the range 0.2-20 millimetre (200 - 20,000 micron). Preferably the method ensures accurate and precise dispensing and cutting, and employs a fine cutting means whereby trace width is in the range 200-500 micron.

Preferably the resin is "metered" to provide a trace penetration within the thickness of the fabric, in sufficient resin quantity to tack the cut ends of the fabric. Trace depth or penetration depth may be up to 99% of the fabric thickness and is preferably 40-90% of the fabric thickness. Penetration may take place on dispensing and prior to cooling, and/or on cutting. A penetration in the range 0.1-4 millimetres prior to cooling may be employed for low or high density, thin or thick fabrics and is obtained by suitable adjustment of the resin composition, for example increasing the quantity of thermoplast to reduce penetration.

Methods for selecting and optimising viscosity and flow control are known in the art, and suitably the viscosity is measured for a range of compositions, in each case varying the temperature and subjecting to a standard shear. From the results a composition may be selected or a melt dispensing temperature selected for a given composition, to suit a particular fabric thickness and density which it is desired to cut.

Preferably resin composition is at least partially temperature dependent and undergoes temperature increase on cutting which serves to increase tack and adhere the cut ends of the fabric. It will be appreciated that the resin composition is however thermally stable and that it does not cure as a result of the temperature increase on dispensing or cutting. It is a further advantage that the thermally stable resin composition used in the method of the invention allows a greater flexibility in temperature control during dispensing and subsequent cutting without the risk of inadvertent curing thereof. This has been found to be particularly useful in that any leaked resin composition does not contaminate the cutting bench by forming hard deposits which may break a cutting blade on impact, moreover does not form hard deposits within a fabric which may impede injection or infusion of preform binder or matrix resin.

After cutting, the cut fabric may be stored or placed in a mould for subsequent processing into an article.

The resin preferably maintains tack for the duration of any storage period, for example for a number of days, preferably at least 48 hours. It is a particular advantage that the resin composition employed in the method of the invention is characterised by moderate tack that is effective to be an aid in the lay up process. Accordingly the cut fabric may be laid up with other layers of fabric and/or laid up in a mould within a few days of cutting, and the residual tack from the cut edges used to assist in maintaining the positioning of the fabric by non contaminating tack to the adjacent fabric layer(s) or mould surface. Since the resin composition is tacky and not adhesive, it leaves no residue and repositioning or removal present no problems.

Suitably the resin composition for use in the method of the invention comprises a thermoplastic resin and a thermosetting resin in ratio 40:60 - 5:95, preferably in ratio 30:70 - 5:95, more preferably in ratio 20:80 - 5:95, for example 15:85 - 10:90. It will be appreciated that the ratio of components may be selected according to the nature thereof.

In a particular advantage of the invention we have found that the combination of thermoplast and thermoset may operate with synergistic effect having regard to the viscosity and flexibility of the combined blend. Suitably the thermoplastic resin serves to provide flow control for the blend, dominating the typically low viscosity thermoset, and to flexibilise the blend, dominating the typically brittle thermoset and the thermoset resin provides tack. This enables the contact, controlled penetration and adhesion of fabric, and flexibility of the cut fabric to allow fabric conformation, for example in shaping in the mould, without tearing or cracking of the tacked edges. Should some leakage occur, it is an advantage of the present invention that the chemically inert tacky resin does not leave a permanent residue and may be simply removed.

Suitably the thermoplast resin component is selected from at least one of the group of polyaromatics such as polyaryl(thio)ethers and in particular polysulphones, heterocyclic aromatic polymers such as polyimides and polyetherimides, polyamides such as nylon, polyesters such as ethan-1, 2-diol PET and PEN, polyurethanes such as thermoplastic polyurethane rubber, polyvinylalcohols and copolymers of the above.

Preferably polyarylethers comprise ether linked phenyl units and ether linked arylsulphone units and reactive end groups, more preferably of the class polyethersulphone:polyetherethersulphone (PES:PEES).

Preferably the thermoplast resin component comprises at least one polyaromatic comprising repeating units of the formula

**-R-Ph-A-Ph-R-**

wherein each A independently is selected from a direct link, SO₂, oxygen, sulphur, -CO- or a divalent hydrocarbon radical;
R is any one or more substituents of the aromatic rings, each independently selected from hydrogen, C₁₋₈ branched or straight chain aliphatic saturated or unsaturated aliphatic groups or moieties optionally comprising one or more heteroatoms selected from O, S, N, or halo for example Cl or F; and groups providing active hydrogen especially OH, NH₂, NHR- or -SH, where R- is a hydrocarbon group containing up to eight carbon atoms, or providing other cross-linking activity especially epoxy, (meth) acrylate, cyanate, isocyanate, acetylene or ethylene, as in vinyl, allyl or maleimide, anhydride, oxazoline and monomers containing saturation; and
wherein said at least one polyaromatic comprises reactive pendant and/or end groups.

Preferably the at least one polyaromatic comprises at least one polyaryl sulphone comprising ether-linked and/or thioether-linked repeating units, the units being selected from the group consisting of

-(PhAPh)ₙ-

and optionally additionally

-(Ph)ₐ-

wherein A is SO₂ or CO, Ph is phenylene, n = 1 to 2, a = 1 to 4 and when a exceeds 1, said phenylenes are linked linearly through a single chemical bond or a divalent group other than -A- or are fused together directly or via a cyclic moiety such as a cycloalkyl group, a (hetero) aromatic group, or cyclic ketone, amide, amine, or imine, said at least one polyarylsulphone having reactive pendant and/or end groups.

More preferably the at least one polyaromatic comprises at least one polyaryl sulphone comprising ether-linked repeating units, optionally additionally comprising thioether-linked repeating units, the units being selected from

-(PhSO₂Ph)ₙ-

and optionally additionally

-(Ph)ₐ-

wherein Ph is phenylene, n = 1 to 2 and can be fractional, a = 1 to 3 and can be fractional and when a exceeds 1, said phenylenes are linked linearly through a single chemical bond or a divalent group other than -SO₂- or are fused together, provided that the repeating unit -(PhSO₂Ph)ₙ- is always present in said at least one polyarylsulphone in such a proportion that on average at least two of said units -(PhSO₂Ph)ₙ- are in sequence in each polymer chain present, said at least one polyarylsulphone having reactive pendant and/or end groups.

Preferably the polyaromatic comprises polyether sulphone, more preferably a combination of polyether sulphone and of polyether ether sulphone linked repeating units, in which the phenylene group is meta- or para- and is preferably para and wherein the phenylenes are linked linearly through a single chemical bond or a divalent group other than sulphone, or are fused together. By "fractional" reference is made to the average value for a given polymer chain containing units having various values of n or a.

Additionally, as also discussed, in said at least one polyarylsulphone, the relative proportions of the said repeating units is such that on average at least two units (PhSO₂Ph)ₙ are in immediate mutual succession in each polymer chain present and is preferably in the range 1:99 to 99:1, especially 10:90 to 90:10, respectively. Typically the ratio is in the range 25-50 (Ph)ₐ, balance (Ph SO₂Ph)ₙ. In preferred polyarylsulphones the units are:

1 X Ph SO₂ Ph X Ph SO₂ Ph ("PES")

and

11 X (Ph)ₐ X Ph SO₂ Ph ("PES")

where X is O or S and may differ from unit to unit; the ratio is 1 to 11 (respectively) preferably between 10:90 and 80:20 especially between 10:90 and 55:45.

The preferred relative proportions of the repeating units of the polyarylsulphone may be expressed in terms of the weight percent SO₂ content, defined as 100 times (weight of SO₂)/(weight of average repeat unit). The preferred SO₂ content is at least 22, preferably 23 to 25%. When a= 1 this corresponds to PES/PEES ratio of at least 20:80, preferably in the range 35:65 to 65:35.

The above proportions refer only to the units mentioned. In addition to such units the polyarylsulphone may contain up to 50 especially up to 25% molar of other repeating units: the preferred SO₂ content ranges (if used) then apply to the whole polymer. Such units may be for example of the formula

**Ph-A-Ph**

as hereinbefore defined, in which A is a direct link, oxygen, sulphur, -CO- or a divalent hydrocarbon radical. When the polyarylsulphone is the product of nucleophilic synthesis, its units may have been derived for example from one or more bisphenols and/or corresponding bisthiols or phenol-thiols selected from hydroquinone, 4,4'-dihydroxybiphenyl, resorcinol, dihydroxynaphthalene (2,6 and other isomers), 4,4'-dihydroxybenzophenone, 2,2'-di(4-hydroxyphenyl)propane and -methane.

If a bis-thiol is used, it may be formed in situ, that is, a dihalide as described for example below may be reacted with an alkali sulphide or polysulphide or thiosulphate.

Other examples of such additional units are of the formula

**-Ph-Q(Ar-Q')**_{**n**}**-Ph-**

in which Q and Q', which may be the same or different, are CO or S02; Ar is a divalent aromatic radical; and n is 0, 1, 2, or 3, provided that n is not zero where Q is SO2. Ar is preferably at least one divalent aromatic radical selected from phenylene, biphenylene or terphenylene. Particular units have the formula

**-Ph-Q-[-(-Ph-)**_{**m**}**-Q'-]**_{**n**}**-Ph-**

where m is 1, 2 or 3. When the polymer is the product of nucleophilic synthesis, such units may have been derived from one or more dihalides, for example selected from 4,4'-dihalobenzophenone, 4,4' bis(4-chlorophenylsulphonyl)biphenyl, 1,4,bis(4-halobenzoyl)benzene and 4,4'-bis(4-halobenzoyl)biphenyl.

They may of course have been derived partly from the corresponding bisphenols.

The polyaromatic may be the product of nucleophilic synthesis from halophenols and/or halothiophenols. In any nucleophilic synthesis the halogen if chlorine or bromine may be activated by the presence of a copper catalyst.

Such activation is often unnecessary if the halogen is activated by an electron withdrawing group. In any event fluoride is usually more active than chloride. Any nucleophilic synthesis of the polyaromatic is carried out preferably in the presence of one or more alkali metal salts, such as KOH, NaOH or K₂CO₃ in up to 10% molar excess over the stoichiometric.

As previously mentioned, said at least one polyaromatic contains reactive end groups and/or pendant groups. End groups may be obtained by a reaction of monomers or by subsequent conversion of product polymers prior to or subsequently to isolation. Preferably groups are of formula -A'-Y where A' is a divalent hydrocarbon group, preferably aromatic, and Y is a group reactive with epoxide groups or with curing agent or with like groups on other polymer molecules. Examples of Y are groups providing active hydrogen especially OH, NH₂, NHR' or -SH, where R' is a hydrocarbon group containing up to 8 carbon atoms, or providing other cross-linking reactivity especially epoxy, (meth)acrylate, cyanate, isocyanate, acetylene or ethylene, as in vinyl, allyl or maleimide, anhydride, oxazaline and monomers containing saturation. Preferred end groups include amine and hydroxyl.

The number average molecular weight of the polyaromatic is suitably in the range 2000 to 20000. A useful sub-range is over 3000, especially in the range of 3000 to 11000, for example 3000 to 9000.

Thermoset resin components may be selected from the group consisting of an epoxy resin, an addition-polymerisation resin, especially a bis-maleimide resin, a formaldehyde condensate resin, especially a formaldehyde-phenol resin, a cyanate resin, an isocyanate resin, a phenolic resin and mixtures of two or more thereof, and is preferably an epoxy resin derived from the mono or poly-glycidyl derivative of one or more of the group of compounds consisting of aromatic diamines, aromatic monoprimary amines, aminophenols, polyhydric phenols, polyhydric alcohols, polycarboxylic acids and the like, or a mixture thereof, a cyanate ester resin or a phenolic resin. Examples of addition-polymerisation resins are acrylics, vinyls, bis-maleimides, and unsaturated polyesters. Examples of formaldehyde condensate resins are urea, melamine and phenols.

Preferably the thermoset resin component comprises at least one epoxy, cyanate ester or phenolic resin precursor, which is liquid at ambient temperature for example as disclosed in EP-A-0 311 349, EP-A-0 365168, EPA 91310167.1 or in PCT/GB95/01303. Preferably the thermoset is an epoxy resin.

An epoxy resin may be selected from N,N,N'N'-tetraglycidyl diamino diphenylmethane (eg "MY 9663", "MY 720" or "MY 721" sold by Ciba-Geigy) viscosity 10-20 Pa s at 50°C; (MY 721 is a lower viscosity version of MY720 and is designed for higher use temperatures); N,N,N',N'-tetraglycidyl-bis(4-aminophenyl)-1,4-diiso- propylbenzene (eg Epon 1071 sold by Shell Chemical Co) viscosity 18-22 Poise at 110°C; N,N,N',N'-tetraglycidyl-bis(4-amino-3,5-dimethylphenyl)- 1,4-diisopropylbenzene, (eg Epon 1072 sold by Shell Chemical Co) viscosity 30-40 Poise at 110°C; triglycidyl ethers of p-aminophenol (eg "MY 0510" sold by Ciba-Geigy), viscosity 0.55 - 0.85 Pa s at 25°C; preferably of viscosity 8-20 Pa at 25°C; preferably this constitutes at least 25% of the epoxy components used; diglycidyl ethers of bisphenol A based materials such as 2,2-bis(4,4'-dihydroxy phenyl) propane (eg "DE R 661" sold by Dow, or "Epikote 828" sold by Shell), and Novolak resins preferably of viscosity 8-20 Pa s at 25°C; glycidyl ethers of phenol Novolak resins (eg "DEN 431" or "DEN 438" sold by Dow), varieties in the low viscosity class of which are preferred in making compositions according to the invention; digylcidyl 1,2-phthalate, eg GLY CEL A-100; diglycidyl derivative of dihydroxy diphenyl methane (Bisphenol F) (eg "PY 306" sold by Ciba Geigy) which is in the low viscosity class. Other epoxy resin precursors include cycloaliphatics such as 3',4'-epoxycyclohexyl-3,-4-epoxycyclohexane carboxylate (eg "CY 179" sold by Ciba Geigy) and those in the "Bakelite" range of Union Carbide Corporation.

A cyanate ester resin may be selected from one or more compounds of the general formula NCOAr(YₓArₘ)_{q}OCN and oligomers and/or polycyanate esters and combinations thereof wherein Ar is a single or fused aromatic or substituted aromatics and combinations thereof and therebetween nucleus linked in the ortho, meta and/or para position and x = 0 up to 2 and m and q = 0 to 5 independently. The Y is a linking unit selected from the group consisting of oxygen, carbonyl, sulphur, sulphur oxides, chemical bond, aromatic linked in ortho, meta and/or para positions and/or CR₁R₂ wherein R₁ and R₂ are hydrogen, halogenated alkanes, such as the fluorinated alkanes and/or substituted aromatics and/or hydrocarbon units wherein said hydrocarbon units are singularly or multiply linked and consist of up to 20 carbon atoms for each R₁ and/or R₂ and P(R₃R₄R'₄R₅) wherein R₃ is alkyl, aryl, alkoxy or hydroxy, R'₄ may be equal to R₄ and a singly linked oxygen or chemical bond and R₅ is doubly linked oxygen or chemical bond or Si(R₃R₄R'₄R₆) wherein R₃ and R₄, R'₄ are defined as in P(R₃R₄R'₄R₅) above and R₅ is defined similar to R₃ above. Optionally, the thermoset can consist essentially of cyanate esters of phenol/formaldehyde derived Novolaks or dicyclopentadiene derivatives thereof, an example of which is XU71787 sold by the Dow Chemical Company.

A phenolic resin may be selected from any aldehyde condensate resins derived from aldehydes such as methanal, ethanal, benzaldehyde or furfuraldehyde and phenols such as phenol, cresols, dihydric phenols, chlorphenols and C₁₋₉ alkyl phenols, such as phenol, 3- and 4- cresol (1- methyl, 3- and 4- hydroxy benzene), catechol (2- hydroxy phenol), resorcinol (1, 3- dihydroxy benzene) and quinol (1, 4- dihydroxy benzene). Preferably phenolic resins comprise cresol and novolak phenols.

The thermoset resin component is suitably the product of at least partly curing a resin precursor using a curing agent and optionally a catalyst.

The weight proportion of thermoplast component in the composition is typically in the range 5 to 40%, preferably 5 to 30%, especially 5 to 20%, for example 10 to 15%.

The resin composition comprises at least one resin component as hereinbefore defined and preferably comprises resin components which are compatible with a matrix resin to be used in the subsequent molding. More preferably the resin composition comprises in combination a thermoplastic resin and a thermosetting resin, most preferably comprises thermoplast selected from polyaromatic in combination with thermoset selected from cyanate ester, bismaleimide or epoxy in the range 20:80 - 5:95. More preferably the composition comprises as polyaromatic a polysulphone having up to 25% of added monomers, more preferably comprising polyethersulphone: polyetherethersulphone in the ratio 90:10 - 10:90, more preferably 60:40 - 50:50, and optionally comprising up to 25% of added monomers such as biphenyl. The preferred composition has been found to have excellent viscosity control, thermal stability and conferred flexibility. The resin component ratio may be tailored to a desired viscosity window.

The method for the preparation of the resin composition as hereinbefore defined comprises admixing the resin components, optionally in the presence of solvent and/or warming to a temperature of up to 80°C, with subsequent removal of solvent and cooling. When the composition is in liquid or spray form the resin components are suitably dissolved in a solvent such as dichloromethane. When the composition is in film form the components are suitably cast onto a release surface, which may be a sheet surface suitable for cutting to a desired trace shape to be laid out on a fabric to be cut, or may be a ribbon surface suitable for laying out in a desired shape on a fabric to be cut. When the composition is in powder form the composition is suitably granulated and milled to appropriate particle size.

The method for selecting or blending a resin composition having desired viscosity and tack at ambient and/or elevated temperature, for dispensing on a given fabric and cutting as hereinbefore defined, comprises determining a required viscosity for penetration of the given fabric, with reference to fabric density (aerial weight) and/or thickness and selecting at least one resin component and a dispensing temperature with reference to viscosity-temperature data. Preferably the method comprises establishing viscosity-temperature data for one or more resin compositions.

A dispensing cutting apparatus suitable for use in a method for cutting dry fabrics as hereinbefore defined comprises a reservoir for resin composition, a nozzle for dispensing a trace of resin and a cutting means aligned to follow the resin trace.

Preferably the reservoir comprises means for heating the resin or regulating the temperature of heated resin in the form of any melt, alternatively means for pressurising a resin in the form of a spray, alternatively means for contact heating resin in the form of a powder or film.

Preferably the nozzle and cutting means are adapted to follow a common trace, for example aligned with respect to the direction of advance of the apparatus, or including sensor or other means for guiding and locating the nozzle and cutting means. The apparatus may be programmable to trace and cut to high precision.

The cut fabric may be stored for subsequent use or may be placed in a mould for subsequent processing into an article. In a particular advantage the dry fabric comprises at least one resin trace as hereinbefore defined which may be used for positioning the fabric in preparation of a fibre form or preform for dry fibre moulding in the preparation of a composite material.

In a further aspect of the invention there is provided a method for dry fibre moulding comprising cutting a fabric using the method as hereinbefore defined, placing in a mould, optionally contacting with a binder resin for example as disclosed in copending GB 0028341.6 (WO 02/42376) and injecting or infusing matrix resin, wherein matrix resin comprises in combination or separately a thermoplast and thermosetting resin, typically in weight ratio 10 : 90 to 90 : 10, which may be the same as or different to the resin used in the preparation of the fabric for cutting.

The cut fabric of the invention is suited for production of preforms for use with a wide variety of matrix resins comprising in combination or separately a thermoplast and thermosetting resin, typically in weight ratio 10/90-90/10 such as 20/80-40/60, for example 30/70. The cutting resin is required to be chemically and physically compatible with the matrix resin to be used, preferably to be miscible, soluble and mutually compatible therewith Compatible cutting resin may comprise same or different resins and resin component to a suitable matrix resin and will be apparent to those skilled in the art. Importantly the cutting resin must not impede or interfere with the injection of matrix resin or alter the flow front in any way.

Preferred matrix resins comprise a thermoplast and thermoset, selected from components as hereinbefore defined for the cutting resin. Preferably cutting resin and matrix resin comprise thermoplast component differing only in reactive end group type, Mn and/or PES:PEES ratio, and more preferably differing only in Mn, whereby matrix resin thermoplast has Mn in the range up to 60,000, and PES:PEES ratio. Cutting resin and matrix resin may comprise thermoset resin component of different class, for example cutting resin component comprises epoxy resin and matrix resin comprises resin selected from addition-polymerisation resin, a formaldehyde condensate resin, a cyanate resin, an isocyanate resin, a phenolic resin and mixtures of two or more thereof. Preferably cutting resin and matrix resin comprise thermoset resin component of same or different resin type within same class, such as the same or different resin types as hereinbefore defined within the class of epoxy resin.

Finally cutting resin and matrix resin may comprise the same components in different relative weight ratio of thermoplast to thermoset wherein cutting resin has ratio in range 40:60 - 5:95, preferably in ratio 30:70 - 5:95, more preferably in ratio 20:80 - 5:95, for example 15:85 - 10:90 and matrix resin has ratio in range 10/90-90/10 such as 20/80-40/60, for example 30/70 as hereinbefore defined.

The invention is now illustrated in non-limiting manner with reference to the following examples and figures.

### Example 1 - Preparation of Resin Composition Comprising Epoxy and Polyaromatic

The resin composition was prepared by warming epoxy or epoxies, at temperature not exceeding 60°C. The polyaromatic comprising 40:60 PES:PEES copolymer with primary amine termination, 12K, was synthesised by reacting 1 mol of DCDPS with 2 moles of m-aminophenol using potassium carbonate as the catalyst and sulpholane as the reaction solvent. The polyaromatic, dissolved in a small amount of dichloromethane, was then added in an amount of from 10-20 wt%. Once the resins had been warmed and their viscosity reduced the solvent was removed at 60°C. The resin was used immediately or cooled for later use.

Compositions were studied for viscosity, permeation and tack and the results are given in Table 1.

**Table I - Compositions studied**

| PY306/ 40:60 PES:PEES ratio | Eta*(Pa.s) @ RT | Eta*(Pa.s) @ 50°C | Solvent required | Permeation | Tack at 2 days |
|---|---|---|---|---|---|
| 60/40 | - | - | Yes | Poor | No |
| 70/30 | - | - | Yes | Fair | No |
| 80/20 | 800 | 50 | No | Fair | Yes |
| 90/10 | 40 | 3 | No | Good | Yes |

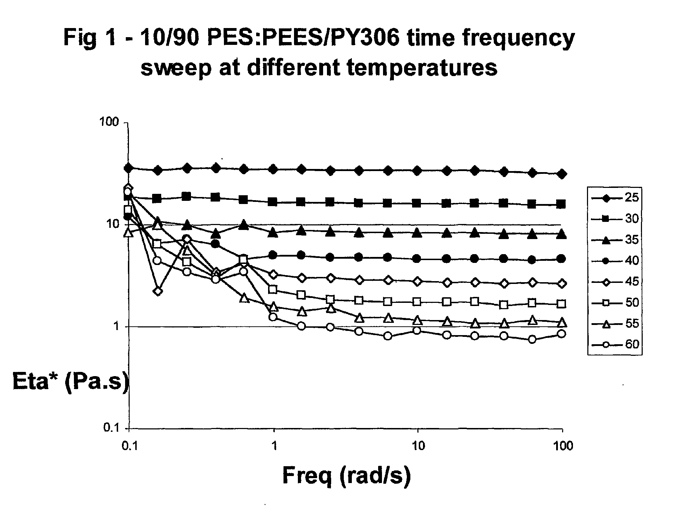

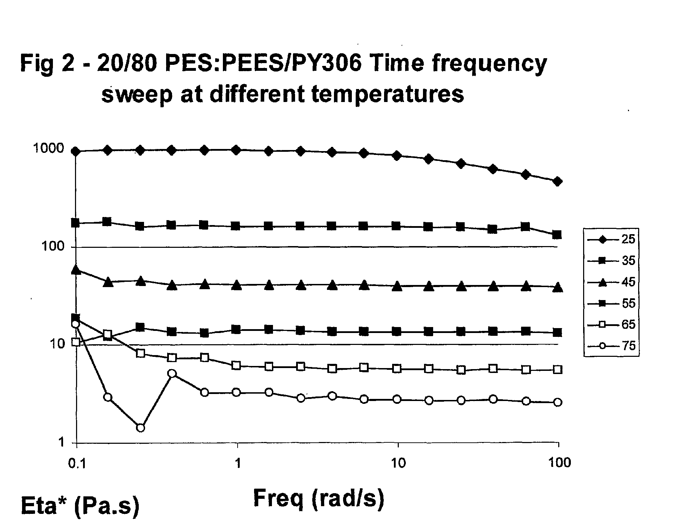

Viscosity data was obtained as a function of temperature and applied shear for two compositions and the results are given in Figures 1 and 2. From the data, a reference shear value of 10 rad/s was chosen at which resin performance was observed to be steady for both compositions across the entire temperature range. This data was used to optimise resin compositions and dispensing conditions for given fabrics.

### Example 2 - Dispensing and Cutting

2-3 mm thick dry fabric (multiaxial 600 g/m²) was traced with resin compositions obtained in Example 1. The compositions were manually dispensed using a nozzle at a rate of 4-5 g/s and speed of advance of nozzle of 0.2 m/s. The fabric was allowed to stand for 2 to 3 minutes during which the melt was observed to penetrate through the fabric thickness to the opposite face, but was retained within the fabric thickness by cooling in this period. The fabric was then cut with a GFM US50 cutting machine, following the resin trace.

As a comparison the dispensing method was repeated on a similar fabric sample, reducing the dispensing rate or increasing the nozzle advance speed.

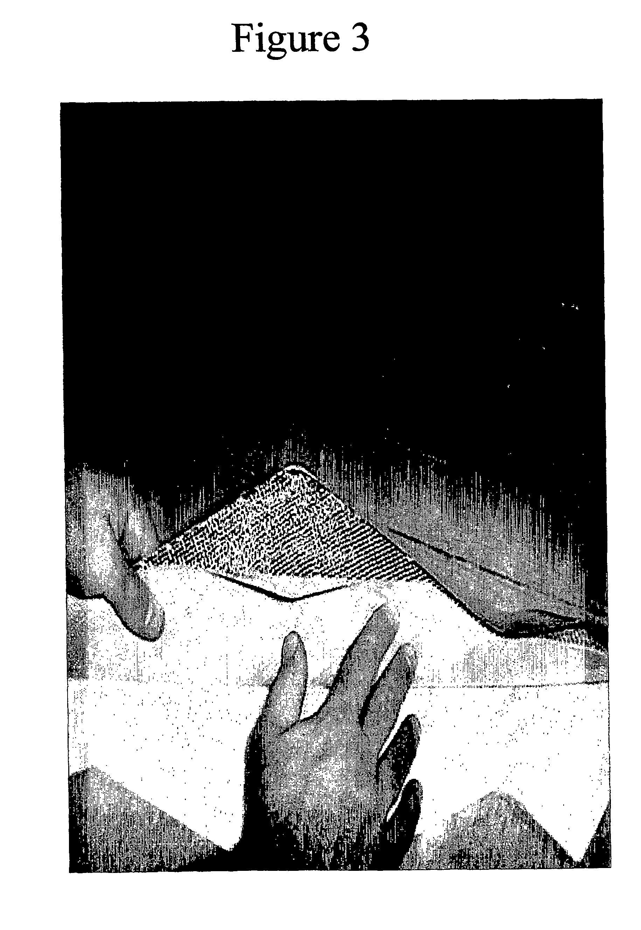

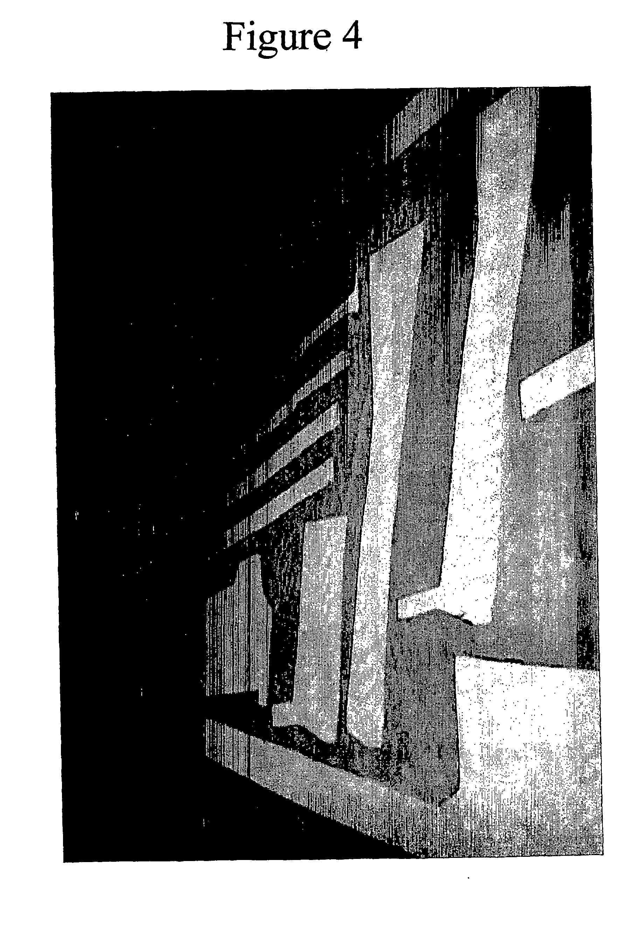

The cut fabric is shown in Figures 3 and 4. Figure 3 shows excellent performance and cutting quality with no loose fibres.

Figure 4 shows fibre loosening where cutting failed to follow the resin trace, or tack was locally ineffective due to insufficient thickness penetration.

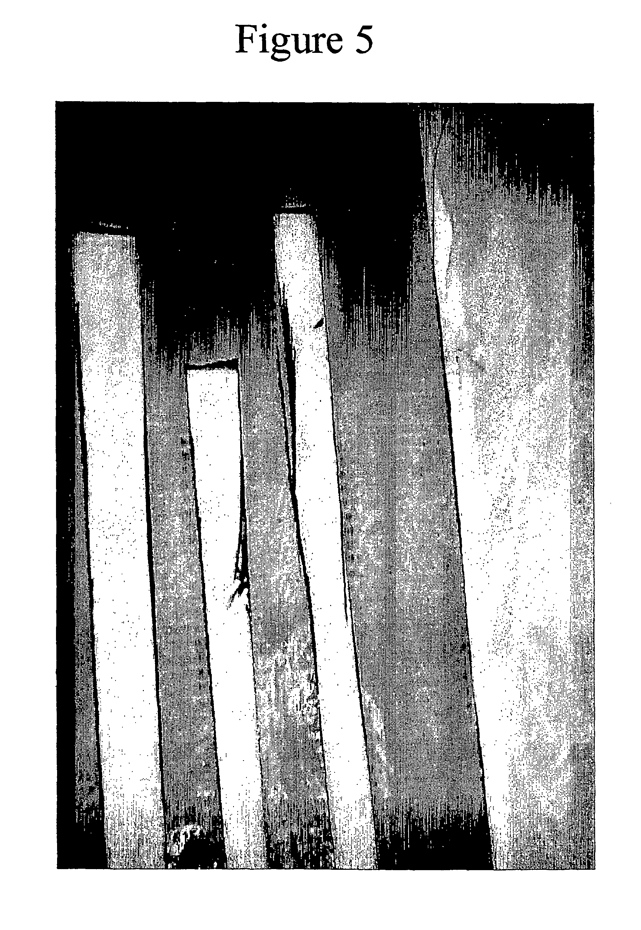

As comparison, a similar fabric sample was cut without use of resin trace. The results are shown in Figure 5.

### Example 3 - Resin Film Infusion

The cut fabric of Example 2 was laid up in a mould, overlaid with binder resin and heated to infuse matrix resin comprising corresponding epoxy, polyaromatic in 60:40 ratio and curing catalysts, to form a composite part. Studies were made of resin film infusion of the resin cut fabric and the conventional cut fabric. The cutting resin was found not to impede matrix resin infusion and the finished part was of superior quality and uniformity to the conventional cut infused fabric.

### BRIEF DESCRIPTION OF FIGURES

Figures 1 and 2 show viscosity data obtained as a function of temperature and applied shear for two binder compositions of the invention.
Figures 3 shows cut fabric according to the invention.
Figure 4 shows cut fabric not according to the invention where cutting failed to follow the resin trace.
Figure 5 shows cut fabric not according to the invention where a similar fabric sample to Figure 3 was cut without use of resin trace.

## Claims

1. A method for preparing fabric for cutting for dry moulding comprising dispensing a trace of a resin composition on the fabric surface to provide a desired fabric cutting line for cutting the fabric along the trace of dispensed resin with cutting means, the trace penetrating to a depth of from 40 to 99% of the fabric thickness, wherein the resin composition is stable under ambient or elevated temperature dispensing and cutting conditions, has a viscosity in the range 2000-1 Pa.s (18°C) and tack or softening at ambient or elevated temperature in the range 20 to 130°C, and comprises at least one resin component which is unchanged after dispensing and cutting at dispensing and cutting conditions, and reverts to its resin form.

2. A method as claimed in Claim 1 which comprises dispensing a resin composition in absence of any curing agent, catalyst or cross linking agent which is activated by the dispensing or curing conditions.

3. A method as claimed in Claims 1 or 2 which comprises laying up fabric for preparing and cutting on a suitable surface such as a cutting table, pre-tracing a shape to be cut with a suitable marker, dispensing said resin composition and cutting, or storing for later cutting.

4. A method as claimed in any preceding claim in which dispensing conditions comprises preheating the resin to a melt prior to dispensing, or heating in situ, to generate the resin in melt form; or dispensing the resin as a powder or film and heating to molten; or dispensing the resin as a spray.

5. A method as claimed in any preceding claim wherein the resin is provided in or generated in melt form at ambient or elevated temperature in the range 20 to 130°C.

6. A method as claimed in any preceding claim in which the fabric is any fabric which is prone to disassemble, disintegrate, or otherwise form rough or loose edges on dry cutting.

7. A method as claimed in any preceding claim in which the fabric is any directional or non-directional aligned fibres in the form of a mesh, tow, scrim, braided or woven, knitted or non-crimped fabrics.

8. A method as claimed in any preceding claim in which the fabric is of density or aerial weight in the range of 200 to 2000g/m².

9. A method as claimed in any preceding claim in which the fabric is of thickness in the range 0.2 to 10 millimetres, either as a single fabric layer or a plurality of assembled layers.

10. A method as claimed in any preceding claim in which the fabric comprises organic fibres selected from polyester, polyaromatic and poly paraphenylene terephthalamide polymers or inorganic fibres selected from carbon, boron or glass fibres, alumina, zirconia, silicon carbide, ceramics and metals.

11. A method as claimed in any preceding claim in which the resin composition is **characterised by** temperature independent viscosity or partially dependent viscosity whereby viscosity is substantially unchanged or decreases in the range as hereinbefore defined in Claim 1 both on heating to a resin melt, and on contact or incidence of the cutting means.

12. A method as claimed in any preceding claim in which the resin permeates the fabric surface and partially penetrates the fabric to a depth 0.1 to 4mm, but is not able to contact the cutting surface.

13. A method as claimed in any preceding claim in which resin trace is of width in the range 0.5 to 20mm.

14. A method as claimed in any preceding claim in which the resin composition comprises a thermoplast resin component and a thermoset resin component in ratio 40 : 60 to 5 : 95.

15. A method as claimed in Claim 14 in which the thermoplast resin component is selected from at least one of the group of polyaromatics such as polyaryl(thio)ethers and in particular polysulphones, heterocyclic aromatic polymers such as polyimides and polyetherimides, polyamides such as nylon, polyesters such as ethan-1, 2-diol PET and PEN, polyurethanes such as thermoplastic polyurethane rubber, polyvinylalcohols and copolymers thereof.

16. A method as claimed in Claim 15 in which the at least one polyaromatic comprises either-linked and/or thioether-linked repeating units, the units being selected from the group consisting of:
-(PhAPh)ₙ-
and optionally additionally
-(Ph)ₐ-
wherein A is SO₂ or CO, Ph is phenylene, n = 1 to 2, a = 1 to 4 and when a exceeds 1, said phenylenes are linked linearly through a single chemical bond or a divalent group other than -A- or are fused together directly or via a cyclic moiety such as a cycloalkyl group, a (hetero) aromatic group, or cyclic ketone, amide, amine, or imine, said at least one polyarylsulphone having reactive pendant and/or end groups.

17. A method as claimed in Claim 15 in which the at least one polyaromatic comprises ether-linked repeating units, optionally additionally comprising thioether-linked repeating units, the units being selected from:
-(PhSO₂Ph)ₙ-
and additionally
-(Ph)ₐ-
wherein Ph is phenylene, n = 1 to 2 and can be fractional, 1 = 1 to 3 and can be fractional and when a exceeds 1, said phenylenes are linked linearly through a single chemical bond or a divalent group other than -SO₂- or are fused together, provided that the repeating unit -(PhSO₂Ph)n- is always present in said at least one polyarylsulphone in such a proportion that on average at least two of said units -(PhSO₂Ph)ₙ- are in sequence in each polymer chain present, said at least one polyarylsulphone having reactive pendant and/or end groups.

18. A method as claimed in any one of Claims 15 to 17 in which the at least one polyaromatic comprises polyether sulphone, preferably a combination of polyether sulphone and of polyether ether sulphone repeating units, in which the phenylene group is meta- or para- and is preferably para and wherein the phenylenes are linked linearly through a single chemical bond or a divalent group other than sulphone, or are fused together.

19. A method as claimed in any one of Claims 15 to 18 wherein the units are:
I X Ph SO₂ Ph X Ph SO₂ Ph ("PES")
and
II X (Ph)ₐ X Ph SO₂ Ph ("PEES")
where X is O or S and may differ from unit to unit; the ratio is I to II (respectively) preferably between 10 : 90 and 80 : 20, such as between 35 : 65 and 65 : 35.

20. A method as claimed in any of Claims 16 to 19 which reactive end groups comprise groups reactive with epoxide groups or with curing agent or with like groups on other polymer molecules, selected from groups providing active hydrogen, especially OH, NH₂ NHR' or -SH, where R' is a hydrocarbon group containing up to 8 carbon atoms, or providing other cross-linking reactivity especially epoxy, (meth)acrylate, cyanate, isocyanate, acetylene or ethylene, as in vinyl, allyl or maleimide, anhydride, oxazaline and monomers containing unsaturation.

21. A method as claimed in any of Claims 15 to 20 in which the number average molecular weight of the polyaromatic is in the range 2000 to 20000.

22. A method as claimed in any of Claims 14 to 21 wherein the thermoset resin component is selected from the group consisting of an epoxy resin, an addition-polymerisation resin, especially a bis-maleimide resin, a formaldehyde condensate resin, especially a formaldehyde-phenol resin, a cyanate resin, an isocyanate resin, a phenolic resin and mixtures of two or more thereof.

23. A method as claimed in any of Claims 14 to 22 comprising thermoplast polyaromatic comprising polyethersulphone: polyetherether sulphone in ratio 60 : 40 to 50 : 50 in combination with thermoset selected from cyanate ester, bismaleimide and epoxy in the range 20 : 80 to 5 : 95.

24. A method as claimed in any one of Claims 14 to 23 in which the resin composition is prepared by admixing the thermoset and thermoplast resin components, optionally in the presence of solvent and/or warming to a temperature of up to 80°C.

25. A method as claimed in any preceding claim in which the resin composition is dispensed from a dispensing cutting apparatus comprising a reservoir for resin composition, a nozzle for dispensing a trace of resin and a cutting means aligned to follow the resin trace.

26. A method as claimed in any preceding claim which comprises the step of cutting the fabric in which the cutting conditions comprise contact or incidence of the molten or cooled resin trace, by cutting means which generates insignificant energy and no temperature increase or which generates substantial energy causing localised temperature increase of the resin trace.

27. A method for dry fibre moulding comprising cutting a fabric using a method claimed in Claim 26, placing the cut fabric in a mould, optionally contacting with a binder resin and injecting or infusing matrix resin wherein matrix resin comprises in combination or separately a thermoplast and thermosetting resin, typically in weight ratio 10 : 90 to 90 : 10, which may be the same as or different to the resin used in the preparation of the fabric for cutting.

## Patentansprüche

1. Verfahren zur Vorbereitung eines Textilerzeugnisses zum Schneiden zum Trockenformen, umfassend das Abgeben einer Spurlinie aus einer Harzzusammensetzung auf die Textiloberfläche zum Bereitstellen einer gewünschten Textilschnittlinie zum Schneiden des Textilerzeugnisses entlang der Spurlinie aus abgegebenem Harz mit einem Schneidemittel, wobei die Spurlinie auf eine Tiefe von 40 bis 99% der Textildicke eindringt, wobei die Harzzusammensetzung unter Umgebungs- oder erhöhten Temperaturabgabe- und -schnittbedingungen stabil ist, eine Viskosität im Bereich von 2000-1 Pa.s (18°C) aufweist und bei Umgebungs- oder erhöhter Temperatur im Bereich von 20 bis 130 °C klebt oder erweicht und mindestens eine Harzkomponente umfasst, die nach dem Abgeben und Schneiden bei Abgabe- und Schnittbedingungen unverändert ist und zu ihrer Harzform zurückkehrt.

2. Verfahren nach Anspruch 1, das das Abgeben einer Harzzusammensetzung in Abwesenheit jeglichen Aushärtungsmittels, -katalysators oder Vernetzungsmittels, das durch die Abgabe- oder Schnittbedingungen aktiviert wird, umfasst.

3. Verfahren nach Anspruch 1 oder 2, das das Aufbringen des Textilerzeugnisses zum Vorbereiten oder Schneiden auf eine geeignete Oberfläche wie einen Schneidetisch, das Vorzeichnen einer Spurlinie in einer zu schneidenden Form mit einem geeigneten Markierer, das Abgeben der Harzzusammensetzung und das Schneiden oder Lagern für späteres Schneiden umfasst.

4. Verfahren nach einem der vorangehenden Ansprüche, wobei die Abgabebedingungen das Vorwärmen des Harzes zu einer Schmelze vor dem Abgeben oder Erwärmen in situ zum Bilden einer Schmelzform des Harzes oder das Abgeben des Harzes als Pulver oder Film und Erwärmen zum Schmelzen oder das Abgeben des Harzes als Sprühung umfasst.

5. Verfahren nach einem der vorangehenden Ansprüche, wobei das Harz bei Umgebungs- oder erhöhter Temperatur im Bereich von 20 bis 135 °C in Schmelzform bereitgestellt oder gebildet wird.

6. Verfahren nach einem der vorangehenden Ansprüche, wobei das Textilerzeugnis ein beliebiges Textilerzeugnis ist, das für das Zerlegen, Zerfallen oder sonstiges Bilden von rauen oder lockeren Kanten beim Trockenschnitt anfällig ist.

7. Verfahren nach einem der vorangehenden Ansprüche, wobei es sich bei dem Textilerzeugnis um beliebige gerichtete oder nicht gerichtete angeordnete Fasern in Form eines Maschengebildes, Seils, Faservlieses, umflochtenen oder gewebten, gestrickten oder nicht gekräuselten Textilerzeugnisses handelt.

8. Verfahren nach einem der vorangehenden Ansprüche, wobei das Textilerzeugnis eine Dichte oder ein Luftgewicht im Bereich von 200 bis 2000 g/m² aufweist.

9. Verfahren nach einem der vorangehenden Ansprüche, wobei das Textilerzeugnis entweder als einzelne Textilschicht oder als mehrere zusammengefügte Schichten eine Dicke im Bereich von 0,2 bis 10 Millimeter aufweist.

10. Verfahren nach einem der vorangehenden Ansprüche, wobei das Textilerzeugnis organische Fasern, ausgewählt aus Polyester, polyaromatischen und Polyparaphenylenterephthalamid-Polymeren, oder anorganische Fasern, ausgewählt aus Kohlenstoff-, Bor- oder Glasfasern, Alumina, Zirkonia, Siliciumcarbid, Keramiken und Metallen, umfasst.

11. Verfahren nach einem der vorangehenden Ansprüche, wobei die Harzzusammensetzung durch eine Temperaturunabhängige Viskosität oder teilweise abhängige Viskosität **gekennzeichnet** ist, wobei die Viskosität im wie hier vorstehend in Anspruch 1 definierten Bereich sowohl beim Erwärmen auf eine Harzschmelze als auch bei Kontakt oder unter Einwirkung des Schneidemittels im Wesentlichen unverändert oder vermindert ist.

12. Verfahren nach einem der vorangehenden Ansprüche, wobei das Harz die Textiloberfläche durchdringt und in das Textilerzeugnis auf eine Tiefe von 0,1 bis 4 mm teilweise eindringt, die Schnittfläche jedoch nicht kontaktieren kann.

13. Verfahren nach einem der vorangehenden Ansprüche, wobei die Harzspurlinie eine Breite im Bereich von 0,5 bis 20 mm aufweist.

14. Verfahren nach einem der vorangehenden Ansprüche, wobei die Harzzusammensetzung eine thermoplastische Harzkomponente und eine wärmeaushärtbare Harzkomponente im Verhältnis 40:60 bis 5:95 umfasst.

15. Verfahren nach Anspruch 14, wobei die thermoplastische Harzkomponente ausgewählt ist aus mindestens einer der Gruppe von polyaromatischen Verbindungen wie Polyaryl(thio)ethern und insbesondere Polysulfonen, heterocyclischen aromatischen Polymeren wie Polyimiden und Polyetherimiden, Polyamiden wie Nylon, Polyestern wie Ethan-1,2-diol PET und PEN, Polyurethanen wie thermoplastischem Polyurethankautschuk, Polyvinylalkoholen und Copolymeren davon.

16. Verfahren nach Anspruch 15, wobei die mindestens eine polyaromatische Verbindung etherverknüpfte und/oder thioetherverknüpfte Wiederholungseinheiten umfasst, wobei die Einheiten ausgewählt sind aus der Gruppe bestehend aus:
-(PhAPh)ₙ-
und wahlweise zusätzlich
-(Ph)ₐ-
wobei A SO₂ oder CO ist, Ph Phenylen ist, n = 1 bis 2, a = 1 bis 4 und falls a 1 übersteigt, die Phenylene durch eine chemische Einfachbindung oder eine andere zweiwertige Gruppe als -A- linear verknüpft oder direkt oder über eine cyclische Einheit wie eine Cycloalkylgruppe, eine (hetero)aromatische Gruppe oder ein cyclisches Keton, Amid, Amin oder Imin aneinander gebunden sind, wobei das mindestens eine Polyarylsulfon reaktive anhängige und/oder Endgruppen aufweist.

17. Verfahren nach Anspruch 15, wobei die mindestens eine polyaromatische Verbindung etherverknüpfte Wiederholungseinheiten, wahlweise zusätzlich thioetherverknüpfte Wiederholungseinheiten umfasst, wobei die Wiederholungseinheiten ausgewählt sind aus:
-(PhSO₂Ph)ₙ-
und zusätzlich
-(Ph)ₐ-
wobei Ph Phenylen ist, n = 1 bis 2 und fraktionell sein kann, 1 = 1 bis 3 und fraktionell sein kann und, falls a 1 übersteigt, die Phenylene durch eine chemische Einfachbindung oder eine andere zweiwertige Gruppe als -SO₂- linear verknüpft oder aneinander gebunden sind, mit der Maßgabe, dass die Wiederholungseinheit -(PhSO₂Ph)ₙ- in dem mindestens einen Polyarylsulfon in derartigem Verhältnis immer vorliegt, dass durchschnittlich zwei der Einheiten -(PhSO₂Ph)ₙ- in jeder vorliegenden Polymerkette in Folge vorliegen, wobei das mindestens eine Polyarylsulfon reaktive anhängige und/oder Endgruppen aufweist.

18. Verfahren nach einem der Ansprüche 15 bis 17, wobei die mindestens eine polyaromatische Verbindung Polyethersulfon, vorzugsweise eine Kombination aus Polyethersulfon- und Polyetherethersulfon-Wiederholungseinheiten umfasst, wobei die Phenylengruppe in meta- oder para- und vorzugsweise para-Stellung liegt und wobei die Phenylene durch eine chemische Einfachbindung oder eine andere zweiwertige Gruppe als Sulfon linear verknüpft oder aneinander gebunden sind.

19. Verfahren nach einem der Ansprüche 15 bis 18, wobei es sich bei den Einheiten um Folgendes handelt:
I X Ph SO₂ Ph X Ph SO₂ Ph "(PES") und
II X(PH)ₐ X Ph SO₂ Ph ("PEES"),
wobei X O oder S ist und von Einheit zu Einheit verschieden sein kann; das Verhältnis von I zu II (jeweils) vorzugsweise zwischen 10:90 und 80:20 wie zwischen 15:65 und 65:35 liegt.

20. Verfahren nach einem der Ansprüche 16 bis 19, wobei die reaktiven Endgruppen Gruppen umfassen, die mit Epoxidgruppen oder mit Aushärtungsmittel oder mit ähnlichen Gruppen an anderen Polymermolekülen reaktiv sind, ausgewählt aus Gruppen, die aktiven Wasserstoff, insbesondere OH, NH₂, NHR' oder -SH, wobei R' eine bis zu 8 Kohlenstoffatomen enthaltende Kohlenwasserstoffgruppe ist, oder eine andere Vernetzungsreaktivität, insbesondere Epoxy(meth)acrylat), Cyanat, Isocyanat, Acetylen oder Ethylen wie in Vinyl, Allyl oder Maleimid, Anhydrid, Oxazalin und Unsättigung enthaltenden Monomeren bereitstellen.

21. Verfahren nach einem der Ansprüche 15 bis 20, wobei das Zahlenmittel des Molekulargewichts der polyaromatischen Verbindung im Bereich von 2000 bis 20000 liegt.

22. Verfahren nach einem der Ansprüche 14 bis 21, wobei die wärmeaushärtbare Harzkomponente ausgewählt ist aus der Gruppe, bestehend aus einem Epoxyharz, einem Additionspolymerisationsharz, insbesondere einem Bismaleimidharz, einem Formaldehydkondensatharz, insbesondere einem Formaldehyd-Phenol-Harz, einem Cyanatharz, einem Isocyanatharz, einem phenolischen Harz und Gemischen aus zwei oder mehreren davon.

23. Verfahren nach einem der Ansprüche 14 bis 22, umfassend thermoplastische polyaromatische Verbindungen, umfassend Polyethersulfon : Polyetherethersulfon in einem Verhältnis von 60:40 bis 50:50 in Kombination mit einer wärmeaushärtbaren Verbindung, ausgewählt aus Cyanatester, Bismaleimid und Epoxy im Bereich von 20:80 bis 5:95.

24. Verfahren nach einem der Ansprüche 14 bis 23, wobei die Harzzusammensetzung durch Mischen der wärmeaushärtbaren und thermoplastischen Harzkomponente, wahlweise in Gegenwart eines Lösungsmittels und/oder durch Erwärmen auf eine Temperatur bis zu 80 °C hergestellt wird.

25. Verfahren nach einem der vorangehenden Ansprüche, wobei die Harzzusammensetzung von einer Abgabeschneideapparatur, umfassend einen Behälter für die Harzzusammensetzung, eine Düse zum Abgeben einer Harzspurlinie und ein Schneidemittel, das derart angeordnet ist, dass es der Harzspur folgt, abgegeben wird.

26. Verfahren nach einem der vorangehenden Ansprüche, umfassend den Schritt des Schneidens des Textilerzeugnisses, wobei die Schnittbedingungen den Kontakt oder die Einwirkung der geschmolzenen oder abgekühlten Harzspurlinie umfassen, durch ein Schneidemittel, das unbedeutende Energie und keine Temperaturerhöhung erzeugt oder das eine merkliche Energie erzeugt, wodurch eine lokale Temperaturerhöhung der Harzspurlinie verursacht wird.

27. Verfahren zum Trockenfaserformen, umfassend das Schneiden eines Textilerzeugnisses unter Verwendung eines Verfahrens nach Anspruch 26, wobei das geschnittene Textilerzeugnis in eine Form gegeben wird, indem es wahlweise mit einem Bindemittelharz in Kontakt kommt, und Matrixharz injiziert oder infundiert wird, wobei das Matrixharz in Kombination oder getrennt ein thermoplastisches und wärmeaushärtbares Harz typischerweise in einem Gewichtsverhältnis von 10:90 bis 90:10 umfasst, die gleich oder verschieden zu dem bei der Vorbereitung des Textilerzeugnisses zum Schneiden verwendeten Harz sein können.

## Revendications

1. Procédé de préparation d'un tissu pour la découpe pour un moulage à sec comprenant la distribution d'une trace d'une composition de résine sur la surface du tissu pour fournir une ligne de découpe souhaitée du tissu afin de découper le tissu le long de la trace de résine distribuée avec un moyen de découpe, la trace pénétrant à une profondeur de 40 à 99% de l'épaisseur du tissu, dans lequel la composition de résine est stable dans des conditions de distribution et de découpe à température ambiante ou élevée, présente une viscosité dans la plage de 2000 à 1 Pa (18°C) et un pouvoir adhésif ou assouplissement à température ambiante ou élevée dans la plage de 20 à 130°C, et comprend au moins un composant de résine qui est inchangé après la distribution et la découpe dans les conditions de distribution et de découpe, et qui revient à sa forme de résine.

2. Procédé selon la revendication 1, lequel comprend la distribution d'une composition de résine en l'absence de tout agent de durcissement, catalyseur ou agent de réticulation qui soit activé par les conditions de distribution ou de durcissement.

3. Procédé selon la revendication 1 ou 2, lequel comprend la disposition d'un tissu à préparer et découper sur une surface appropriée telle qu'une table de découpe, le pré traçage d'une forme à découper au moyen d'un marqueur adapté, la distribution de ladite composition de résine et le découpage, ou le stockage pour une découpe ultérieure.

4. Procédé selon l'une quelconque des revendications précédentes, dans lequel les conditions de distribution comprennent le préchauffage de la résine jusqu'à fusion avant la distribution, ou le chauffage in situ, afin de générer la résine sous forme fondue ; ou la distribution de la résine en poudre ou en film et le chauffage jusqu'à fusion ; ou la distribution de la résine sous une forme à vaporiser.

5. Procédé selon l'une quelconque des revendications précédentes, dans lequel la résine est produite ou générée sous forme fondue à température ambiante ou élevée dans la plage de 20 à 130°C.

6. Procédé selon l'une quelconque des revendications précédentes, dans lequel le tissu est tout tissu susceptible de se désassembler, se désintégrer, ou de former d'autre manière des bords rugueux ou relâchés lors de la découpe à sec.

7. Procédé selon l'une quelconque des revendications précédentes, dans lequel le tissu est constitué de toutes fibres alignées orientées ou non orientées sous la forme de tissu en maille, câble, canevas, tressé ou tissé, tricoté ou non crêpé.

8. Procédé selon l'une quelconque des revendications précédentes, dans lequel le tissu a une densité ou un poids aérien dans la plage de 200 à 2000 g/m².

9. Procédé selon l'une quelconque des revendications précédentes, dans lequel le tissu a une épaisseur dans la plage de 0,2 à 10 millimètres, soit en une seule couche de tissu, soit en une pluralité de couches assemblées.

10. Procédé selon l'une quelconque des revendications précédentes, dans lequel le tissu comprend des fibres organiques sélectionnées parmi le polyester, le polyaromatique et les polymères poly paraphénylène téréphtalamide ou des fibres inorganiques sélectionnées parmi le carbone, le bore ou les fibres de verre, l'alumine, le zircone, le carbure de silicium, les céramiques et les métaux.

11. Procédé selon l'une quelconque des revendications précédentes, dans lequel la composition de résine est **caractérisée par** une viscosité indépendante ou partiellement dépendante de la température, moyennant quoi la viscosité est sensiblement inchangée ou diminue dans la plage définie ci-dessus dans la revendication 1 à la fois lors du chauffage jusqu'à fusion de la résine, et lors d'un contact ou d'une incidence avec le moyen de découpe.

12. Procédé selon l'une quelconque des revendications précédentes, dans lequel la résine pénètre la surface du tissu et pénètre partiellement le tissu à une profondeur de 0,1 à 4 mm mais n'est pas capable d'entrer en contact avec la surface de découpe.

13. Procédé selon l'une quelconque des revendications précédentes, dans lequel la trace de résine a une largeur dans la plage de 0,5 à 20 mm.

14. Procédé selon l'une quelconque des revendications précédentes, dans lequel la composition de résine comprend un composant de résine thermoplastique et un composant de résine thermodurcissable selon un rapport de 40:60 à 5:95.

15. Procédé selon la revendication 14, dans lequel le composant de résine thermoplastique est sélectionné parmi au moins l'un du groupe de polyaromatiques comme les polaryl(thio)éthers et en particulier les polysulfones, des polymères aromatiques hétérocycliques comme les polyimides et les polyétherimides, des polyamides comme le nylon, des polyesters comme le éthan-1,2-diol PET et PEN, des polyuréthanes comme le caoutchouc polyuréthane thermoplastique, des alcools de polyvinyle et de copolymères de ceux-ci.

16. Procédé selon la revendication 15, dans lequel l'au moins un polyaromatique comprend des motifs répétés de chaîne moléculaire à liaison éther et/ou tioéther, les unités étant sélectionnées parmi le groupe constitué de
-(PhAPh)ₙ-
et en plus, en option
-(Ph)₈-
où A est SO₂ ou CO, Ph est le phénylène, n = 1 à 2, a = 1 à 4 et lorsque a excède 1, lesdits phénylènes sont liés linéairement par une liaison chimique simple ou un groupe divalent autre que -A- ou sont fusionnés ensemble directement ou via un radical cyclique tel qu'un groupe cycloalkyle, un groupe (hétéro)aromatique, ou un cétone cyclique, ou un amide, amine ou imine cyclique, ledit au moins un polyarylsulfone ayant des groupes pendants et/ou des extrémités de chaîne réactifs.

17. Procédé selon la revendication 15, dans lequel l'au moins un polyaromatique comprend des motifs répétés de chaîne moléculaire à liaison éther, comprenant en plus en option des motifs répétés de chaîne moléculaire à liaison thioéther, les unités étant sélectionnées parmi
-(PhSO₂Ph)ₙ-
et en plus en option
-(Ph)₈-
où Ph est le phénylène, n = 1 à 2 et peut être fractionnaire, a = 1 à 3 et peut être fractionnaire et lorsque a excède 1, lesdits phénylènes sont liés linéairement par une liaison chimique simple ou un groupe divalent autre que -SO₂- ou sont fusionnés ensemble, à condition que le motif répété -(PhSO₂Ph)ₙ₋ soit toujours présent dans ledit au moins un polyarylsulfone dans une proportion telle qu'en moyenne, au moins deux desdites unités -(PhSO₂Ph)ₙ- sont en séquence dans chaque chaîne polymère présente, ledit au moins un polyarylsulfone ayant des groupes pendants et/ou des extrémités de chaîne réactifs.

18. Procédé selon l'une quelconque des revendications 15 à 17, dans lequel l'au moins un polyaromatique comprend un poléythersulfone, plus préférablement une combinaison de motifs répétés de chaîne moléculaire à liaison polyéthersulfone et polyétheréther sulfone, dans laquelle le groupe phénylène est méta- ou para- et de préférence para et dans laquelle les phénylènes sont liés linéairement par une liaison chimique simple ou un groupe divalent autre que le sulfone, ou sont fusionnés ensemble.

19. Procédé selon l'une quelconque des revendications 15 à 18, dans lequel les unités sont :
I X Ph SO₂ Ph X Ph SO₂ Ph (« PES »)
et
II X (Ph)ₐ X Ph SO₂ Ph (« PEES »)
où X est O ou S et peut différer d'une unité à l'autre; le rapport est de I à II (respectivement) de préférence entre 10:90 et 80:20, comme entre 35:65 et 65:35.

20. Procédé selon l'une quelconque des revendications 15 à 19, dans lequel les extrémités de chaîne réactives comprennent des groupes réactifs avec les groupes époxyde ou avec un agent de durcissement ou avec des groupes similaires sur d'autres molécules de polymère, sélectionnés parmi les groupes produisant de l'hydrogène actif, en particulier OH, NH₂, NHR' ou -SH, dans lequel R' est un groupe d'hydrocarbure contenant jusqu'à 8 atomes de carbone, ou produisant une autre activité de réticulation, en particulier l'époxy, le méthacrylate, le cyanate, l'isocyanate, l'acétylène ou l'éthylène comme dans le vinyle, l'allyle ou le maléimide, l'anhydride, l'oxazaline et les monomères contenant une insaturation.

21. Procédé selon l'une quelconque des revendications 15 à 20, dans lequel le poids moléculaire moyen du polyaromatique est dans la plage de 2000 à 20000.

22. Procédé selon l'une quelconque des revendications 14 à 21, dans lequel le composant de résine thermodurcissable est sélectionné parmi le groupe constitué d'une résine époxy, une résine de polymérisation d'addition, en particulier une résine bis-maléimide, une résine de condensat de formaldéhyde, en particulier une résine formaldéhyde-phénol, une résine cyanate, une résine isocyanate, une résine phénolique et des mélanges de deux ou plus d'entre elles.

23. Procédé selon l'une quelconque des revendications 14 à 22, comprenant un polyaromatique thermoplastique comprenant un polyéthersulfone:polyétheréthersulfone selon un rapport de 60:40 à 50:50 en combinaison avec un composant thermodurcissable sélectionné parmi l'ester cyanate, le bis-maléimide et l'époxy dans la plage de 20:80 à 5:95.

24. Procédé selon l'une quelconque des revendications 14 à 23, dans lequel la composition de résine est préparée en ajoutant par mélange les composants de résine thermodurcissable et thermoplastique éventuellement en présence de solvant et/ou en chauffant à une température jusqu'à 80°C.

25. Procédé selon l'une quelconque des revendications précédentes, dans lequel la composition de résine est distribuée par un appareil de découpe de distribution comprenant un réservoir pour la composition de résine, une buse pour distribuer une trace de résine et un moyen de découpe aligné pour suivre la trace de résine.

26. Procédé selon l'une quelconque des revendications précédentes, qui comprend l'étape consistant à découper le tissu, dans lequel les conditions de découpe comprennent le contact ou l'incidence avec la trace de résine fondue ou refroidie, du moyen de découpe qui génère une énergie insignifiante et aucune augmentation de température ou qui génère une énergie importante, provoquant une augmentation locale de la température de la trace de résine.

27. Procédé de moulage à sec comprenant la découpe d'un tissu en utilisant un procédé selon la revendication 26, le placement du tissu découpé dans un moule, en option la mise en contact avec une résine liante et l'injection ou l'infusion d'une résine matricielle, dans lequel la résine matricielle comprend en combinaison ou séparément une résine thermoplastique et une résine thermodurcissable, typiquement selon un rapport en poids de 10:90 à 90: 10, qui peuvent être les mêmes ou différentes de la résine utilisée dans la préparation d'un tissu pour la découpe.
